# EUROPÄISCHE PATENTSCHRIFT

(11) **EP 2 687 425 B1**
(45) Veröffentlichungstag und Bekanntmachung des Hinweises auf die Patenterteilung: **22.10.2014**
(21) Anmeldenummer: 13176434.2
(22) Anmeldetag: 15.07.2013
(51) Int. Cl.: B62D 13/02, B60P 3/40

(54) **Transportsystem fuer lange lasten**
Transport system for long loads
Système de transport pour charges longues

(30) Priorität: 19.07.2012 DE 102012106560
(43) Veröffentlichungstag der Anmeldung: 22.01.2014
(73) Patentinhaber: Hubtex Maschinenbau GmbH & Co. Kg, 36041 Fulda (DE)
(72) Erfinder: Otterbein, Achim, 36137 Großenlüder (DE)
(74) Vertreter: Kluin, Jörg-Eden

(56) Entgegenhaltungen:
- EP-A1- 1 352 817
- DE-A1- 10 031 024
- US-A- 4 399 884
- US-A1- 2011 108 334

## Beschreibung

Die Erfindung betrifft ein Transportsystem für lange Lasten, wie beispielsweise Eisenbahnwagons, Triebwagenuntergestellen von beispielsweise bis zu 30 m Länge. Das Transportsystem ist gleichermaßen auch für beliebige andere, langgestreckte Lasten, wie beispielsweise zu einem Bündel zusammengefügte Baumstämme, Brückenpfeiler, Windradflügel usw. geeignet. Solche Transportsysteme sind zum Beispiel von US 4399 884 und EP 1352 817 bekannt.

Es besteht vielfältig der Bedarf, lange Lasten zu transportieren. Insbesondere in industriell genutzten Bereichen, wie beispielsweise Werksgeländen, Häfen, Verladebahnhöfen usw. müssen häufig langgestreckte Lasten auf engem Raum rangiert werden.

Der Erfindung liegt die Aufgabe zugrunde, ein verbessertes Transportsystem für lange Lasten zu schaffen.

Diese Aufgabe wird durch das in Anspruch 1 wiedergegebene Transportsystem gelöst.

Es umfasst mindestens zwei Einzelfahrzeuge, die jeweils Kupplungsmittel umfassen, mittels denen sie wahlweise mit der Last kuppelbar sind. Um die Rangierfähigkeit zu optimieren, weisen die Einzelfahrzeuge jeweils eine eigene Antriebseinrichtung und eine eigene Lenkeinrichtung auf. Im mit der Last gekuppelten Zustand kann diese dann durch entsprechende Ansteuerung der Antriebs- und Lenkeinrichtungen der Einzelfahrzeuge nahezu beliebig verlagert werden, beispielsweise in einer Art Karussellfahrt um den Mittelpunkt eines Fahrzeugs, um einen in der senkrecht zur Projektionsfläche der Last liegenden Drehpunkt, in Diagonalfahrt etc., je nach Wahl der Verfahrwege der Einzelfahrzeuge. Es versteht sich, dass die Verfahrwege der Einzelfahrzeuge aufeinander abgestimmt sein müssen.

Um zu vermeiden, dass es aufgrund von nicht exakt aufeinander abgestimmten Verfahrwegen der einzelnen Fahrzeugen zu unkontrollierbaren, mechanischen Belastungen der Einzelfahrzeuge und/oder der langen Last oder auch anderen Bauteilen des Transportsystems kommen kann, sind die Kupplungsmittel mit Kraftsensoren wirkverbunden, die im mit der Last gekuppelten Zustand der Einzelfahrzeuge auf die Kupplungsmittel wirkende Kräfte erfassen. Die Kraftsensoren sind mit der Antriebseinrichtung und/oder der Lenkeinrichtung zumindest eines der Einzelfahrzeuge derart gekoppelt, dass die Antriebseinrichtung und/oder die Lenkeinrichtung des zumindest einen Einzelfahrzeugs im Sinne einer Reduzierung der auf die Kupplungsmittel wirkenden Kräfte beeinflussbar sind. Mit anderen Worten werden in Abhängigkeit der erfassten, auf die Kopplungsmittel wirkenden Kräfte die von der Antriebseinrichtung abgerufene Leistung und/oder die mittels der Lenkeinrichtung vorgegebenen Lenksollwerte derart korrigiert, dass dies zu einer Reduzierung der auf die Kopplungsmittel wirkenden Kräfte führt. Das erfindungsgemäße Transportsystem zeichnet sich somit dadurch aus, dass Fehlbetätigungen von Antriebs- und/oder Lenkeinrichtungen der Einzelfahrzeuge dahingehend, dass die Antriebsleistungen und/oder die Lenkbefehle nicht exakt an diejenigen der anderen Einzelfahrzeuge angepasst sind, selbsttätig korrigiert werden.

Bei einer bevorzugten Ausführungsform sind die Kraftsensoren derart ausgebildet, dass sie Kräfte, die etwa parallel zum Untergrund auf die Kopplungsmittel wirken, hinsichtlich der Größe und der Richtung der Kraft erfassen. Hierzu können die Kraftsensoren beispielsweise als zweiachsig wirkende Kraftaufnehmer ausgebildet sein.

Um die mittels der Kraftsensoren erfassten Kraftmesswerte und -richtungen verarbeiten zu können, umfasst das erfindungsgemäße Transportsystem vorzugsweise eine Zentralelektronik, auch Gesamtfahrzeugsteuereinrichtung genannt durch welche die Steuerung oder Regelung sowohl der Antriebseinrichtungen, als auch der Lenkeinrichtungen der mit der Last gekuppelten Einzelfahrzeugen bewirkt wird. Die Kraftsensoren sind mit dieser Zentralelektronik dann derart verbunden, dass die von der Zentralelektronik für die Antriebs- und/oder Lenkeinrichtungen bereitgestellten Steuer- oder Regelgrößen im Sinne einer Reduzierung der auf die Kupplungsmittel wirkenden Kräfte reduziert werden.

Bei einer darüber hinaus besonders bevorzugten Ausführungsform des erfindungsgemäßen Transportsystems sind die Einzelfahrzeuge im mit der Last gekuppelten Zustand miteinander derart koppelbar oder gekoppelt, dass ein Fahr- und Lenkverhalten zumindest ähnlich einem die Einzelfahrzeuge umfassenden starren Gesamtfahrzeug bewirkt wird. Hierzu können die Antriebs- und Lenkeinrichtungen der Einzelfahrzeuge beispielsweise über die Gesamtfahrzeugsteuereinrichtung (Zentralelektronik) derart miteinander verbunden sein, dass die den angetriebenen Rädern der Einzelfahrzeuge zugeführten Antriebsleistungen und/oder die Lenkwinkel der gelenkten Räder der Einzelfahrzeuge so aufeinander abgestimmt sind, dass es nicht zum Schlupf bzw. Radieren eines oder mehrerer Räder auf dem Untergrund kommt. Die erfindungsgemäße Ausbildung des Transportfahrzeugs führt dazu, dass eventuell durch Regelungenauigkeiten, durch Fahrbahnunebenheiten und/oder auf sonstige Weise auf die Kopplungsmittel dennoch wirkenden Kräfte durch Beeinflussung der Antriebs- und/oder Lenkeinrichtungen reduziert werden.

Bei einer ganz besonders bevorzugten Weiterbildung des erfindungsgemäßen Transportsfahrzeugs ist eine Abstandserfassungseinrichtung vorgesehen, die mit der zuvor erwähnten Gesamtfahrzeugsteuereinrichtung (Zentralelektronik) zusammenwirkt. Mit der Abstandserfassungseinrichtung wird der Abstand der an die Last angekuppelten Einzelfahrzeuge relativ zueinander bestimmt. Die genaue Kenntnis dieses Abstandes ist von besonderer Bedeutung, da er die Lenkwinkel beeinflusst, um welche jede Lenkeinrichtung zur Erzielung eines bestimmten Fahrzustandes betätigt werden muss. Insbesondere hängt der Lenkwinkel vom Abstand der Fahrzeuge zueinander dann ab, wenn bei Kurven- oder Karussellfahrt ein Radieren eines oder mehrerer Räder verhindert werden soll, was voraussetzt, dass sich die Radachsen alle in einem einzigen Pol, dem Lenkpol schneiden. Die Gesamtfahrzeugsteuereinrichtung wird dann mit dem gemessenen Entfernungswert beaufschlagt. Auch die Gesamtfahrzeugsteuereinrichtung kann unterschiedliche Lenkprogramme aufweisen. In Abhängigkeit des jeweiligen Lenkprogramms werden dann unter Berücksichtigung der mittels beispielsweise Lenkrad bestückten Gesamtlenkgebers der Gesamtsteuerungseinrichtung vorgegebenen Lenkbefehle und unter Berücksichtung des übermittelten Abstandes die einzelnen Räder im Sinne eines für den gewünschten Fahrzustand optimalen Lenkwinkel betätigt. Je nach Lenkprogramm verlaufen die Radachsen sämtlicher Räder an Einzelfahrzeugen etwa in einem gemeinsamen Lenkpol (beispielsweise bei Kurven- oder bei Karussellfahrt). Oder die Radachsen sämtlicher Räder aller Einzelfahrzeuge verlaufen etwa parallel zueinander, beispielsweise bei Vorwärts-, Quer- oder Schrägfahrt.

Bei einer weiteren bevorzugten Ausführungsform des erfindungsgemäßen Transportsystems sind auch die Antriebseinrichtungen der Einzelfahrzeuge mit der Gesamtfahrzeugsteuereinrichtung wirkverbunden, und zwar derart, dass die Antriebseinrichtungen im mit der Last gekuppelten Zustand unter Berücksichtigung des Abstandes, des Lenkprogramms und des mittels des Gesamtlenkgebers vorgegebenen Lenksollwerts derart ansteuerbar sind, dass die Drehzahl der angetriebenen Räder an den jeweiligen Fahrzustand im Sinne des Vermeidens von Schlupf zwischen Radoberfläche und Untergrund anpassbar ist.

Die Abstandserfassungseinrichtung kann auf beliebige Weise, die eine ausreichend präzise Abstandsbestimmung zwischen den Einzelfahrzeugen ermöglicht, konstruktiv ausgestaltet sein. Unter "ausreichend präzise" ist eine Abstandsbestimmung zu verstehen, die vorzugsweise einen Abstandsfehler kleiner einem Prozent, besonders bevorzugt kleiner einem Promille des tatsächlichen Abstandes zwischen den Einzelfahrzeugen sicherstellt.

Die Abstandserfassungseinrichtung kann konstruktiv durch einen Seilzuglängengeber ausgebildet sein. Beispielhaft seien als weitere, konstruktive Varianten Laser basierte oder Radar basierte Abstandserfassungssysteme genannt. Vorzugsweise ist die Abstandserfassungseinrichtung derart ausgebildet, dass sie den Abstand der Einzelfahrzeuge zueinander an mehreren Stellen erfasst. Auf diese Weise können beispielsweise auch Schrägstellungen der Einzelfahrzeuge zueinander im an die Last gekuppelten Zustand ermittelt und bei der Lenkwinkelvorgabe der gelenkten Räder der Einzelfahrzeuge berücksichtigt werden.

Die Erfindung soll nachfolgend anhand der beigefügten Zeichnungen, die ein Ausführungsbeispiel eines erfindungsgemäßen Transportsystems rein schematisch in einer Ansicht von oben, d. h. senkrecht auf den Untergrund, darstellen, weiter erläutert werden. Es zeigen:
- Fig. 1: ein Einzelfahrzeug im von einer Last entkuppelten Zustand;
- Fig. 2: zwei Fahrzeuge in einem mit einer Last gekuppelten Zustand bei einer Karussellfahrt, bei welcher das in der Zeichnung rechts dargestellte Fahrzeug im Vergleich zu dem links dargestellten mit einer falschen Antriebsleistung beaufschlagt ist sowie
- Fig. 3: dieselbe Darstellung wie in Fig. 2, jedoch mit falschen Lenkwinkeln der Räder des in Fig. 3 rechts dargestellten Fahrzeugs.

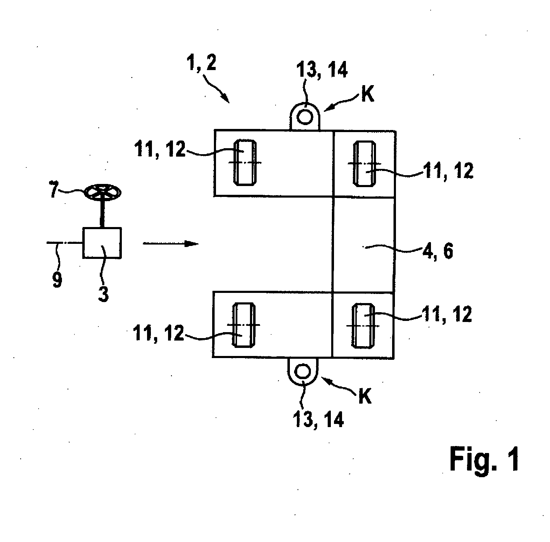

Das in der Zeichnung dargestellte Ausführungsbeispiel 100 des erfindungsgemäßen Transportsystems umfasst zwei Einzelfahrzeuge 1, 2, von denen in Fig. 1 jedoch lediglich eines dargestellt ist. Die beiden Einzelfahrzeuge können identisch ausgebildet sein. Es ist jedoch ebenfalls möglich, unterschiedliche Einzelfahrzeuge und/oder auch mehr als zwei vorzusehen, wenn dies aufgrund beispielsweise der Länge und/oder der Masse der zu transportierenden Last vorteilhaft erscheint.

Beim von einer Last entkuppelten Zustand können die Einzelfahrzeuge mit ihren jeweils zugeordneten Lenk- und Antriebseinrichtungen 3, 4; 5, 6 verfahren werden. Die Lenkeinrichtungen 3, 5 können - wie beispielsweise in Fig. 1 angedeutet - als von dem jeweiligen Einzelfahrzeug 1, 2 separate Funkfernsteuereinrichtung ausgebildet sein. Sie können einen beispielsweise mit einem Lenkrad 7, 8 gekoppelten Lenksollwertgeber sowie einen beispielsweise mit seinem Betätigungshebel 9, 10 gekoppelten Antriebsleistungsgeber umfassen. Über das jeweilige Lenkrad 7, 8 können die mit geeigneten Lenkmotoren angetriebenen lenkbaren Räder 11, 12 - hier sämtliche Räder des jeweiligen Einzelfahrzeugs 1, 2-jeweils um eine senkrecht zur Zeichenebene verlaufende Lenkachse gelenkt werden. Mit dem jeweiligen Betätigungshebel 9, 10 kann die Antriebsleistung, mit dem die angetriebenen Räder 11, 12, hier sämtliche Räder, die mit geeigneten Antriebsmotoren gekoppelt sind, und somit die Fahrgeschwindigkeit des jeweiligen Einzelfahrzeugs 1, 2 beeinflusst werden.

Mit Hilfe der Lenkeinrichtungen 3, 5 können die Einzelfahrzeuge sowohl aus ihrem von einer Last entkuppelten Zustand so in Ausrichtung gebracht werden, dass sie mit der Last gekuppelt werden können. Dies kann beispielsweise dadurch geschehen, dass die beiden Einzelfahrzeuge 1, 2 mit Hilfe der Lenkeinrichtungen 3, 5 in eine Aufrichtung zueinander gebracht werden, in denen Kuppelelemente 13, 14 - hier in Form von an den Einzelfahrzeugen 1, 2 angebrachten Augen - sich in Positionen befinden, in denen Gegenkuppelelemente einer Last - hier beispielsweise in der Zeichnung nicht erkennbare Bolzen - durch Absenken der Last in die Augen eingefahren werden. Die Last ist aus Gründen der Übersicht lediglich durch zwei parallele, jeweils ein Paar Kuppelelemente 13, 14 miteinander verbindende Balken dargestellt und mit L bezeichnet.

Die beiden Einzelfahrzeuge 1, 2 können auch im an die Last L gekuppelten Zustand grundsätzlich mit den Lenk- und Antriebseinrichtungen 3, 4; 5, 6 jeweils separat voneinander betätigt werden. Um zu vermeiden, dass es aufgrund nicht aufeinander abgestimmter Betätigungsparameter zu mechanischen Überlastungen von Teilen des Transportsystems kommt, sind an den Kuppelelementen 13, 14 Kraftsensoren K vorgesehen, die in der Zeichnung nicht erkennbar sind. Die von den Kraftsensoren K parallel zum Untergrund erfassten Kräfte, symbolisiert durch die an die Kuppelelemente 13, 14 angreifenden Pfeile P werden einer Gesamtfahrzeugsteuereinrichtung 16 (Zentralelektronik) übermittelt. Diese Gesamtfahrzeugsteuereinrichtung korrigiert die Antriebsleistungs- und Lenkparameter, mit welchen die angetriebenen und/oder gelenkten Räder beaufschlagt sind, derart, dass die mit Hilfe der Kraftsensoren an den Kuppelelementen 13, 14 angemessenen Kräfte möglichst gering sind.

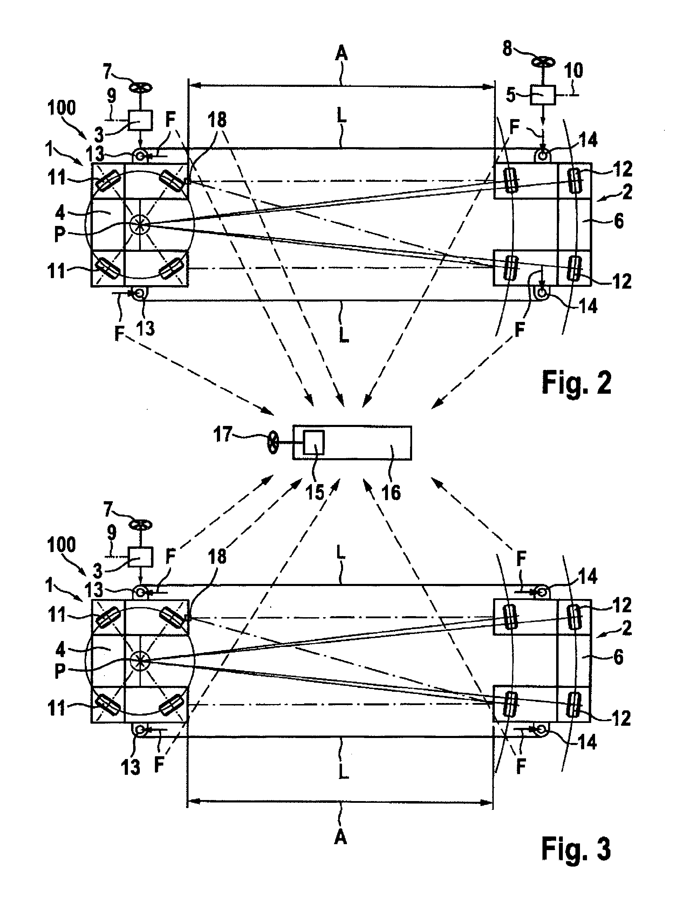

Bei dem in Fig. 2 dargstellten Betriebszustand wirken auf die Kuppelelemente 14 des Fahrzeugs 2 Kräfte etwa tangential zum Radius, um den sich die Kuppelelemente in der Karussellfahrt um den Drehpunkt P befinden. Die Antriebsleistungen, mit denen die Räder 11 des Fahrzeugs 1 einerseits und die Räder 12 des Fahrzeugs 2 beaufschlagt sind, sind nicht korrekt aufeinander abgestimmt. Mit Hilfe der Gesamtfahrzeugsteuereinrichtung 16 würde nun eine Antriebsleistungsanpassung dahingehend bewirkt, dass weder die tangential zum Radius verlaufenden Kräfte des zweiten Fahrzeugs 2, als auch die in entgegengesetzter Richtung an den Kuppelelementen 13 des ersten Fahrzeugs angreifenden Kräfte minimiert werden. Hierzu kann die Gesamtfahrzeugsteuereinrichtung 16 derart ausgestaltet sein, dass lediglich die Antriebs- und/oder Lenkparameter des einen, beispielsweise des zweiten Fahrzeugs 2 beeinflusst werden. D. h. dieses Ausführungsbeispiel des erfindungsgemäßen Transportsystems arbeitet nach dem so genannten "Master-Slave-System", wobei hier Fahrzeug 1 die Master-, Fahrzeug 2 die Slaverolle übernimmt.

Bei dem in Fig. 3 dargestellten Ausführungsbeispiel wirken die auf die Kuppelelemente 13 des Fahrzeugs 1 einerseits und die auf die Kuppelelemente 14 des Fahrzeugs 2 andererseits ausgeübten Kräfte in entgegengesetzter Richtung. Ein derartiger Betriebszustand kommt beispielsweise dann zustande, wenn die Räder 12 des zweiten Fahrzeugs sich in Lenkwinkeln befinden, die dazuführen, dass das Fahrzeug 2 bestrebt ist, in einem größeren Abstand um den Drehpunkt P zu kreisen, als durch die Länge der Last vorgegeben ist. In diesem Falle korrigiert die Gesamtfahrzeugsteuereinrichtung 16 die Lenkwinkel der Räder 12.

Die Gesamtfahrzeugsteuereinrichtung 16 umfasst bei dem in der Zeichnung dargestellten Ausführungsbeispiel auch einen Gesamtfahrzeuglenkgeber 15, der mit einem Lenkrad 17 gekoppelt ist. Die Gesamtfahrzeugsteuereinrichtung 16 wirkt derart mit den beiden Einzelfahrzeugen 1, 2 zusammen, dass diese mittels der Gesamtsteuereinrichtung elektronisch miteinander gekoppelt sind und sich hinsichtlich des Antriebs- und des Lenkverhaltens wie zu einem starren Fahrzeug verbunden verhalten.

Da sowohl die Antriebsleistung, als auch die Lenkwinkel, welche zu einem möglichst gut aufeinander abgestimmten Betrieb der beiden Einzelfahrzeuge 1,2 erforderlich sind, von deren Abstand zueinander abhängen, ist eine Abstandserfassungseinrichtung 18 vorgesehen, die den Abstand zwischen den beiden Fahrzeugen 1, 2 an verschiedenen Stellen und in verschiedenen Richtungen erfasst. Die Abstandswerte werden - wie auch die mit den Kraftsensoren K erfassten Kraftwerte F - zwecks Anpassung der Antriebsleistungen und Lenkwinkel an den jeweiligen Fahrzustand der Gesamtfahrzeugsteuereinrichtung 16 übermittelt. Die Übermittlung der Kraft- und Abstandswerte ist in den Fig. 2 und 3 durch die auf die Gesamtfahrzeugsteuereinrichtung 16 gerichteten Pfeile symbolisiert.

### Bezugszeichenliste:

- 100: Transportsystem
- 1: Einzelfahrzeug
- 2: Einzelfahrzeug
- 3: Lenkeinrichtung
- 4: Antriebseinrichtung
- 5: Lenkeinrichtung
- 6: Antriebseinrichtung
- 7: Lenkrad
- 8: Lenkrad
- 9: Betätigungshebel
- 10: Betätigungshebel
- 11: Räder
- 12: Räder
- 13: Kuppelelemente
- 14: Kuppelelemente
- 15: Gesamtfahrzeuglenkgeber
- 16: Gesamtfahrzeugsteuereinrichtung
- 17: Lenkrad
- 18: Abstandserfassungseinrichtungen
- A: Abstand
- L: Last
- P1: Lenkpol
- P2: Lenkpol
- S: Strecken
- X: Pfeil
- K: Kraftsensor
- F: Kraft

## Patentansprüche

1. Transportsystem (100) für lange Lasten (L), insbesondere für ISO-Container,
mit mindestens zwei Einzelfahrzeugen (1, 2), die jeweils Kupplungsmittel (13, 14) umfassen, mittels denen sie wahlweise mit der Last kuppelbar sind,
wobei die Einzelfahrzeuge (1, 2) jeweils eine eigene Antriebseinrichtung (4, 6)
und eine eigene Lenkeinrichtung (35) umfassen, **dadurch gekennzeichnet, daß**
die Kupplungsmittel (13, 14) mit Kraftsensoren (K) wirkverbunden sind,
die im mit der Last (L) gekuppelten Zustand der Einzelfahrzeuge (1, 2) auf die Kupplungsmittel (13, 14) wirkende Kräfte (F) erfassen,
wobei die Kraftsensoren (K) mit der Antriebseinrichtung (4, 6) und/oder der Lenkeinrichtung zumindest eines der Einzelfahrzeuge derart gekoppelt sind, dass die Antriebseinrichtung (4, 6) und/oder die Lenkeinrichtung (3, 5) des zumindest einen Einzelfahrzeugs im Sinne einer Reduzierung der auf die Kupplungsmittel (13, 14) wirkenden Kräfte (F) beeinflussbar sind.

2. Transportsystem nach Anspruch 1, **dadurch gekennzeichnet, dass** die Kraftsensoren (K) derart ausgebildet sind, dass sie Kräfte (F), die etwa parallel zum Untergrund auf die Kopplungsmittel (13, 14) wirken, hinsichtlich der Größe und
der Richtung der Kraft erfassen.

3. Transportsystem nach einem der Ansprüche 1 oder 2, **dadurch gekennzeichnet, dass** eine Gesamtfahrzeugsteuereinrichtung (16) (Zentralelektronik) vorgesehen ist, durch welche die Steuerung oder Regelung sowohl der Antriebseinrichtungen (4, 6), als auch der Lenkeinrichtungen (3, 5) der mit der Last gekuppelten Einzelfahrzeuge (1, 2) bewirkt wird, und dass die Kraftsensoren (K) mit der Gesamtfahrzeugsteuereinrichtung (16) zusammenwirken, derart, dass die von der Gesamtfahrzeugsteuereinrichtung (16) für die Antriebs- und/oder Lenkeinrichtungen bereitgestellten Steuer- oder Regelgrößen im Sinne einer Reduzierung der auf die Kupplungsmittel (13, 14) wirkenden Kräfte (F) reduziert werden.

4. Transportsystem nach Anspruch 3, **dadurch gekennzeichnet, dass** es genau zwei Einzelfahrzeuge (1, 2) umfasst, und dass die Gesamtfahrzeugsteuereinrichtung (16) derart ausgebildet ist, dass im mit der Last (L) gekuppelten Zustand nur die für die Antriebs- und/oder Lenkeinrichtungen bereitgestellten Steuer- oder Regelgrößen eines der Einzelfahrzeuge (1, 2) im Sinne der Reduzierung der auf die Kupplungsmittel (13, 14) wirkende Kräfte (F) reduziert werden.

5. Transportsystem nach einem der Ansprüche 1 bis 4, **dadurch gekennzeichnet, dass** die Einzelfahrzeuge (1, 2) im mit der Last (L) gekuppelten Zustand derart miteinander koppelbar oder gekoppelt sind, dass ein Fahr- und Lenkverhalten eines die kuppelbaren Einzelfahrzeuge (1, 2) umfassenden starren Gesamtfahrzeugs bewirkt wird.

6. Transportsystem nach Anspruch 5, **dadurch gekennzeichnet, dass** eine Abstandserfassungseinrichtung (18) vorgesehen ist, wobei die Abstandserfassungseinrichtung (18) zur Ermittlung des Abstandes (A) zwischen den Einzelfahrzeugen (1, 2) im mit der Last (L) gekuppelten Zustand vorgesehen ist und der Gesamtfahrzeugsteuereinrichtung (16) den ermittelten Abstand zur Verfügung stellt, und die Gesamtfahrzeugsteuereinrichtung (16) zur Betätigung der Lenkeinrichtung der Einzelfahrzeuge (1, 2) unter Berücksichtigung des Abstandes (A) und des jeweiligen Lenkprogramms in Abhängigkeit eines durch den Gesamtfahrzeuglenkgeber vorgegebenen Lenksollwerts vorgesehen ist, derart, dass sich die Radachsen sämtlicher Räder (11, 12) aller Einzelfahrzeuge (1, 2) etwa in einem gemeinsamen Lenkpol (P) schneiden, oder zumindest nahezu parallel verlaufen.

7. Transportsystem nach Anspruch 6, **dadurch gekennzeichnet, dass** die Antriebseinrichtungen der Einzelfahrzeuge (1, 2) mit der Gesamtfahrzeugsteuereinrichtung (16) wirkverbunden sind, derart, dass die Antriebseinrichtungen im mit der Last gekuppelten Zustand unter Berücksichtigung des Abstandes, des Lenkprogramms und des mittels des Lenkgebers vorgegebene Lenksollwerts derart ansteuerbar sind, dass die Drehzahl der angetriebenen Räder (11, 12) an dem jeweiligen Fahrzustand im Sinne des Vermeidens von Schlupf anpassbar ist.

## Claims

1. Transport system (100) for long loads (L), in particular for ISO containers, having at least two individual vehicles (1, 2) which each comprise coupling means (13, 14) by means of which they can be optionally coupled to the load, wherein the individual vehicles (1, 2) each comprise a separate drive device (4, 6) and a separate steering device (35),
**characterized in that** the coupling means (13, 14) are operatively connected to force sensors (K) which, in the state of the individual vehicles (1, 2) in which they are coupled to the load (L), detect forces (F) acting on the coupling means (13, 14),
wherein the force sensors (K) are coupled to the drive device (4, 6) and/or to the steering device of at least one of the individual vehicles in such a way that the drive device (4, 6) and/or the steering device (3, 5) of the at least one individual vehicle can be influenced in the sense of reducing the forces (F) acting on the coupling means (13, 14).

2. Transport system according to Claim 1, **characterized in that** the force sensors (K) are embodied in such a way that they detect the magnitude and the direction of forces (F) which act on the coupling means (13, 14) approximately parallel to the underlying surface.

3. Transport system according to one of Claims 1 or 2, **characterized in that** a composite vehicle control device (16) (central electronic system) is provided by means of which the open-loop or closed-loop control of both the drive devices (4, 6) and of the steering devices (3, 5) of the individual vehicles (1, 2) which are coupled to the load is brought about, and **in that** the force sensors (K) interact with the composite vehicle control device (16) in such a way that the open-loop or the closed-loop control variables which are made available by the composite vehicle control device (16) for the drive devices and/or steering devices are reduced in the sense of reducing forces (F) acting on the coupling means (13, 14).

4. Transport system according to Claim 3, **characterized in that** said transport system comprises precisely two individual vehicles (1, 2), and **in that** the composite vehicle control device (16) is embodied in such a way that in the state in which it is coupled to the load (L) only the open-loop or closed-loop control variables, made available for the drive devices and/or steering devices, of one of the individual vehicles (1, 2) are reduced in the sense of reducing the forces (F) acting on the coupling means (13, 14).

5. Transport system according to one of Claims 1 to 4, **characterized in that** in the state in which the individual vehicles (1, 2) are coupled to the load (L) they can be coupled or are coupled to one another in such a way that driving behaviour and steering behaviour of a rigid composite vehicle comprising the individual vehicles (1, 2) which can be coupled is brought about.

6. Transport system according to Claim 5, **characterized in that** a distance-sensing device (18) is provided, wherein the distance-sensing device (18) is provided for determining the distance (A) between the individual vehicles (1, 2) in the state in which they are coupled to the load (L) and makes available the determined distance to the composite vehicle control device (16), and the composite vehicle control device (16) is provided for activating the steering device of the individual vehicles (1, 2) taking into account the distance (A) and the respective steering program as a function of a set point steering value which is predefined by the composite vehicle steering signal encoder in such a way that the wheel axles of all the wheels (11 ,12) of all the individual vehicles (1, 2) intersect approximately at a common steering pole (P) or run at least virtually parallel.

7. Transport system according to Claim 6, **characterized in that** the drive devices of the individual vehicles (1, 2) are operatively connected to the composite vehicle control device (16) in such a way that in the state in which the drive devices are coupled to the load they can be actuated taking into account the distance, the steering program and the set point steering value predefined by means of the steering signal encoder, in such a way that the rotational speed of the driven wheels (11, 12) can be adapted to the respective driving state in the sense of avoiding slip.

## Revendications

1. Système de transport (100) pour charges longues (L), en particulier pour des conteneurs ISO, comprenant au moins deux véhicules individuels (1, 2) qui comprennent chacun des moyens d'accouplement (13, 14) au moyen desquels ils peuvent être accouplés de manière sélective à la charge, les véhicules individuels (1, 2) comprenant à chaque fois un dispositif d'entraînement propre (4, 6) et un dispositif de direction propre (35), **caractérisé en ce que** les moyens d'accouplement (13, 14) sont en liaison fonctionnelle avec des capteurs de force (K) qui détectent, dans l'état accouplé à la charge (L) des véhicules individuels (1, 2), des forces (F) agissant sur les moyens d'accouplement (13, 14), les capteurs de force (K) étant accouplés au dispositif d'entraînement (4, 6) et/ou au dispositif de direction d'au moins l'un des véhicules individuels de telle sorte que le dispositif d'entraînement (4, 6) et/ou le dispositif de direction (3, 5) de l'au moins un véhicule individuel puissent être influencés dans le sens d'une réduction des forces (F) agissant sur les moyens d'accouplement (13, 14).

2. Système de transport selon la revendication 1, **caractérisé en ce que** les capteurs de force (K) sont réalisés de telle sorte qu'ils détectent des forces (F) qui agissent approximativement parallèlement au sol sur les moyens d'accouplement (13, 14), en termes d'intensité et d'orientation de la force.

3. Système de transport selon l'une quelconque des revendications 1 ou 2, **caractérisé en ce qu'**un dispositif de commande de véhicule global (16) (électronique centrale) est prévu, par lequel la commande ou la régulation des dispositifs d'entraînement (4, 6) ainsi que des dispositifs de direction (3, 5) des véhicules individuels (1, 2) accouplés à la charge peuvent être effectuées, et **en ce que** les capteurs de force (K) coopèrent avec le dispositif de commande de véhicule global (16) de telle sorte que les grandeurs de commande ou de régulation fournies par le dispositif de commande de véhicule global (16) pour les dispositifs d'entraînement et/ou de direction soient réduites dans le sens d'une réduction des forces (F) agissant sur les moyens d'accouplement (13, 14).

4. Système de transport selon la revendication 3, **caractérisé en ce qu'**il comprend exactement deux véhicules individuels (1, 2), et **en ce que** le dispositif de commande de véhicule global (16) est réalisé de telle sorte que dans l'état accouplé à la charge (L), seules les grandeurs de commande ou de régulation de l'un des véhicules individuels (1, 2) fournies pour les dispositifs d'entraînement et/ou de direction soient réduites dans le sens de la réduction des forces (F) agissant sur les moyens d'accouplement (13, 14).

5. Système de transport selon l'une quelconque des revendications 1 à 4, **caractérisé en ce que** les véhicules individuels (1, 2), dans l'état accouplé à la charge (L), sont accouplés ou peuvent être accouplés l'un à l'autre de telle sorte qu'un comportement de conduite et de direction d'un véhicule global rigide comprenant les véhicules individuels accouplables (1, 2) soit obtenu.

6. Système de transport selon la revendication 5, **caractérisé en ce qu'**un dispositif de détection de distance (18) est prévu, le dispositif de détection de distance (18) étant prévu pour déterminer la distance (A) entre les véhicules individuels (1, 2) dans l'état accouplé à la charge (L) et le dispositif de commande de véhicule global (16) fournissant la distance déterminée, et le dispositif de commande de véhicule global (16) étant prévu pour l'actionnement du dispositif de direction des véhicules individuels (1, 2) en tenant compte de la distance (A) et du programme de direction respectif en fonction d'une valeur de consigne de direction prédéfinie par le capteur de direction du véhicule global, de telle sorte que les essieux de toutes les roues (11, 12) de tous les véhicules individuels (1, 2) s'intersectent approximativement dans un pôle de direction commun (P) ou au moins s'étendent pratiquement parallèlement.

7. Système de transport selon la revendication 6, **caractérisé en ce que** les dispositifs d'entraînement des véhicules individuels (1, 2) sont en liaison fonctionnelle avec le dispositif de commande de véhicule global (16), de telle sorte que les dispositifs d'entraînement, dans l'état accouplé à la charge, en tenant compte de la distance, du programme de direction et de la valeur de consigne de direction prédéfinie au moyen du capteur de direction, puissent être commandés de telle sorte que la vitesse de rotation des roues entraînées (11, 12) puisse être adaptée à l'état de conduite respectif dans le but d'éviter un patinage.
